# EUROPÄISCHE PATENTANMELDUNG

(11) **EP 1 391 588 A1**
(43) Veröffentlichungstag der Anmeldung: **25.02.2004**
(21) Anmeldenummer: 03450122.1
(22) Anmeldetag: 16.05.2003
(51) Int. Cl.: F01K 17/02, F01K 7/22

(54) **Verfahren und Einrichtung zur Erzeugung von Kraft und Wärme aus Abwärmen oder Brennstoffen**

(30) Priorität: 13.08.2002 AT 54402 U
(71) Anmelder: GREENPOWER Anlagenerrichtungs- und Betriebs-GmbH, 1103 Wien (AT)
(72) Erfinder: Beckmann, Georg, 1230 Wien (AT)
(74) Vertreter: Rippel, Andreas, Dipl.-Ing.

(57) **Zusammenfassung**

Bei einem Verfahren zur Erzeugung von Kraft und Wärme aus Abwärmen oder Brennstoffen, insbesondere aus festen Biomassen, wird ein Dampferzeuger (3) und eine Expansionsmaschine (5) verwendet.

Der entstehende Abdampf wird über einen Wasserabscheider (10) und vorzugsweise einen Dampfspeicher (11) zu einer Abdampfexpansionsmaschine (12), vorzugsweise einer Abdampfturbine, geführt.

Dadurch wird eine Verbesserung des Wirkungsgrades erreicht.

## Beschreibung

Die Erfindung bezieht sich auf ein Verfahren und eine Einrichtung zur Erzeugung von Kraft und Wärme aus Abwärmen oder Brennstoffen, insbesondere aus festen Biomassen.

Die zukünftige Energieversorgung mit Strom und Wärme erfordert den vermehrten Einsatz von Kraft-Wärme-Kopplungen im kleinen und mittleren Leistungsbereich, welche insbesondere auch für den Einsatz von Abwärmen und festen Biomassen konzipiert sind. Mit dem steigenden Anteil solcher Kraftwerkstypen in einem Versorgungssystem gewinnt die Frage der flexiblen und bedarfsgerechten Erzeugung der Energieformen Strom und Wärme an Bedeutung. Gerade in dieser Disziplin weisen die herkömmlichen Kraft-Wärme-Kopplungssysteme Schwächen auf.

Gemäß dem Stand der Technik sind bezüglich der Kraft-Wärme-Kopplung folgende Problemlösungen gebräuchlich:
1. Gegendruck-Dampfturbinen, bei denen der Abdampf in einem Heizkondensator niedergeschlagen wird, welcher mit dem Wärmeversorgungsnetz in Verbindung steht;
2. Anzapf-Dampfturbinen, bei denen der Dampf für den Heizkondensator aus der Dampfturbine abgezapft wird, wobei der restliche Dampf weiter expandiert und dem meist im Unterdruck betriebenen Turbinenkondensator zugeführt wird;
3. Mehrgehäusige Dampfturbinen, z. B. als Hoch- und Niederdruckturbine ausgeführt, wo in der Überströmleitung zwischen der Hoch- und der Niederdruckturbine Dampf für den Heizkondensator abgezweigt wird; zwischen der Abzweigung und der Niederdruckturbine befindet sich meist eine Stauklappe, um bei hoher Heizlast den Dampfdruck im Heizkondensator aufrecht zu erhalten; die Niederdruckturbine erfordert auch im Fall der höchsten Heizlast einen Mindestdampfdurchsatz, um die Reibwärme der Turbine abzuführen. Bei manchen Konstruktionen wird in diesem Lastfall die Niederdruckturbine vom Generator abgekoppelt, so dass sie sich nicht dreht.

Die oben genannten Problemlösungen erreichen meist in nur einem Betriebspunkt gute Gesamtwirkungsgrade; bei einer Lastabweichung und auch sonst ergeben sich aber folgende Nachteile:
- Zu 1.:: Die Gegendruck-Dampfturbinen arbeiten bei einem vorgegebenen - nicht variablen - Verhältnis Strom zu Wärme (Stromziffer) und werden meist nach der Wärmelast gefahren; der Strom fällt proportional dazu als Koppelprodukt an; gerade in kleineren Nahversorgungsnetzen für Wärme treten große Schwankungen der Wärmelast auf, so dass auch der erzeugte Strom, und zwar in der Regel nicht bedarfsgerecht, schwankt. Ohne Wärmeabnahme ist auch keine Stromerzeugung möglich, wodurch die Ausnutzungsstunden pro Jahr beschränkt bleiben.
- Zu 2.:: Die Anzapf-Dampfturbinen erlauben eine bestimmte Variation der Stromziffer, es wird aber immer eine nicht zu kleine Teilmenge über den Turbinenkondensator gefahren, welcher die Abwärme an die Umgebung abführt; der Gesamtwirkungsgrad (Strom plus Wärme, bezogen auf die Brennstoffwärme) bleibt damit weit unterhalb jener der Gegendruck-Dampfturbine. Die Anzapf-Dampfturbine erfordert eine Mehrstufenturbine und beschränkt sich damit auf den mittleren bis hohen Leistungsbereich.
- Zu 3.:: Die mehrgehäusige Dampfturbine mit einer Abzweigung von Heizdampf zwischen der Hoch- und der Niederdruckturbine, gegebenenfalls einer Stauklappe und gegebenenfalls mit einer vom Generator abkoppelbaren Niederdruckturbine ist im Fall hoher Wärmelast energetisch ineffizient bzw. allgemein mechanisch aufwendig. Insgesamt leiden alle genannten Problemlösungen an einem Mangel an Anpassungsfähigkeit.

Diese Problematik wird noch verschärft, wenn die Brennstoffwärmeleistung nicht ausreichend genau ausgeregelt werden kann, wie dies bei Biomassen wegen der stark schwankenden Dichte, dem schwankenden Wassergehalt und dem wechselnden Heizwert zutrifft; derartige Anlagen arbeiten nur selten und nicht anhaltend im Bestpunkt, wodurch der Betriebswirkungsgrad oft erheblich unter dem Bestwirkungsgrad zu liegen kommt. Zumindest Gegendruck-Dampfturbinen-Anlagen werden fast immer mit sogenannten Regelwärmetauschem ausgeführt, welche nicht unterbringbare Wärme auf relativ hohem Niveau nutzlos an die Umgebung abgeben.

Die Erfindung hat sich zur Aufgabe gestellt die aufgezeigten Nachteile der bekannten Einrichtungen zu beseitigen, was bei einem Verfahren zur Erzeugung von Kraft und Wärme aus Abwärmen oder Brennstoffen, insbesondere aus festen Biomassen, unter Verwendung eines Dampferzeugers dadurch erreicht wird, daß entstehender Abdampf über einen Wasserabscheider und vorzugsweise einen Dampfspeicher einer Abdampfexpansionsmaschine, vorzugsweise einer Abdampfturbine, zugeführt wird. Merkmale erfindungsgemäßer Einrichtungen sind in den Unteransprüchen gekennzeichnet.

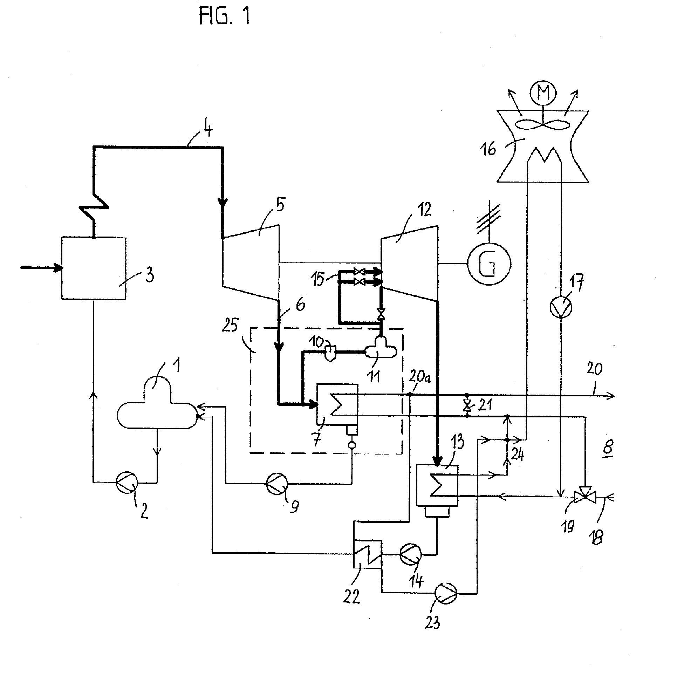

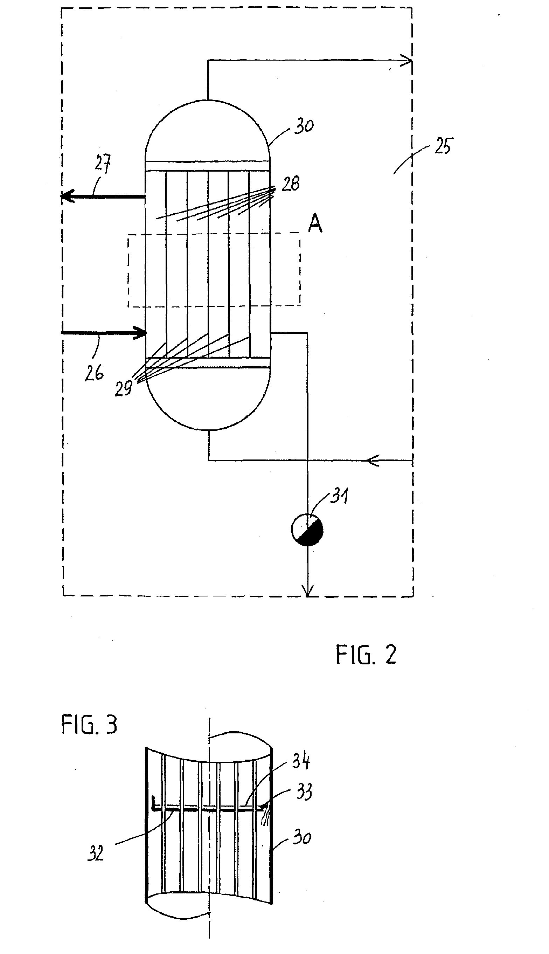

Nachstehend ist die Erfindung anhand von in den Zeichnungen dargestellten Ausführungsbeispielen näher beschrieben, ohne auf diese Beispiele beschränkt zu sein. Dabei zeigt Fig. 1 die erfindungsgemäße Gesamtanlage und Fig. 2 den Wasserabscheider und den Heizkondensator. Fig. 3 stellt das Detail A in Fig. 2 dar.

Gemäß Fig. 1 wird das Speisewasser aus einem Speisewassertank 1 entnommen und über eine Speisewasserpumpe 2 einem Dampfkessel 3 zugeführt, der einen Verdampfer und gegebenenfalls einen Speisewasservorwärmer und einen Dampfüberhitzer aufweist. Der Frischdampf gelangt über eine Frischdampfleitung 4 in eine Hochdruckexpansionsmaschine 5 - in der Regel in eine Hochdruck-Dampfturbine oder aber auch eine Dampfschrauben- oder Dampfkolben-Maschine -, der Abdampf dieser Hochdruckexpansionsmaschine 5 gelangt über die Gegendruckleitung 6 in den Heizkondensator 7, der ein Wärmeversorgungsnetz 8 mit Heizwärme versorgt; sein Kondensat wird über eine Heizkondensatpumpe 9 dem Speisewassertank 1 zugeführt, welcher in der Regel zusätzlich einen Speisewasserentgaser beherbergt. Soweit entspricht das Schaltbild im Wesentlichen dem Hauptkreislauf einer Gegendruck-Dampfturbinen-Anlage.

Der im Betrieb anfallende überschüssige Abdampf wird erfindungsgemäß nicht einem Regelwärmetauscher zum Zweck des Abführens an die Umgebung zugeführt, sondern gelangt über einen Wasserabscheider 10 und gegebenenfalls über einen Dampfspeicher 11 in eine Abdampfexpansionsmaschine 12, die in der Regel als Abdampfturbine ausgeführt ist. Ihr Abdampf wird in einem Turbinenkondensator 13 - welcher in der Regel im Unterdruckbetrieb arbeitet -niedergeschlagen und das anfallende Kondensat über eine Kondensatpumpe 14 dem Haupkreislauf zugeführt. Im Schaltbild sind der Wasserabscheider und der Dampfspeicher nur symbolisch angedeutet, da die folgenden Bilder die Ausbildung dieser Komponenten erläutern.

Die Abdampfturbine weist im gezeigten Beispiel eine Düsengruppenregelung 15 auf, welche vor allem bei der vorzugsweise zum Einsatz kommenden Bauart einer einrädrigen Gleichdruckturbine weitgehend verlustarm arbeitet. Der Turbinenkondensator 13 steht mit einer Wärmesenke in Verbindung, die hier als Luftkühler 16 mit einer dazugehörigen Umwälzpumpe 17 ausgeführt ist; es kann sich natürlich auch um eine Frischwasserkühlung handeln.

Bei hoher Heizlast - bei der Düsengruppenregelung 15 sind dann alle Ventile bis auf eines geschlossen - und einer ausreichend tiefen Rücklauftemperatur kann der Rücklauf 18 des Wärmeversorgungsnetzes 8 auch über ein Dreiwegeventil 19 zunächst über den Turbinenkondensator 13 und dann erst durch den Heizkondensator 7 gedrückt werden, ohne den Luftkühler 16 oder eine zusätzliche Wärmesenke in Anspruch zu nehmen. Die Abdampfturbine 12 liefert dann zusätzlich Strom, ohne die Heizlast zu schmälern. Bei sinkender Heizlast und/oder einem Ansteigen der Kesselleistung - zum Beispiel durch einen trockeneren Biomasse-Brennstoff- kann kontinuierlich der Luftkühler 16 oder eine zusätzliche Wärmesenke dazugefahren werden, um den überschüssigen Abdampf zu verstromen. Zur Regelung der Temperatur im Vorlauf 20 des Wärmeversorgungsnetzes 8 ist an sich in bekannter Weise eine Umgehungsleitung mit Regelventil 21 zum Heizkondensator vorgesehen.

Bei niedriger bis verschwindender Heizlast - dieser Lastpunkt entspricht der maximalen Stromerzeugung - ist es vorteilhaft, die im Turbinenkondensator 13 anfallende Kondensatmenge auf dem Weg in den Speisewassertank 1 vorzuwärmen; erfindungsgemäß ist dafür ein Speisewasser/Heizwasser-Wärmetauscher 22 vorgesehen, der seine Beheizung aus dem Vorlauf vor der Beimischung 20a erhält und das abgekühlte Heizwasser über eine Umwälzpumpe 23 an einer geeigneten Stelle des Heizkreislaufes, z.B. an der Verbindungsleitung 24 zwischen dem Turbinenkondensator 13 und dem Heizkondensator 7 beimengt. Bei diesem Betrieb schlägt der Heizkondensator 7, auch ohne einer externen Heizlast, eine Mindestkondensatmenge nieder. Die Gesamtanlage ist so konzipiert, dass selbst zwischen den extremen Betriebspunkten: maximale Heizlast - minimale Heizlast/maximale Stromerzeugung jede Hauptkomponente ihren Dienst beibehält und solcherart ein kontinuierlicher, flexibler und hocheffizienter Betrieb einer derartigen Anlage möglich ist.

Die Fig. 2 zeigt die Ausführung des Wasserabscheiders 10 und des Heizkondensators 7 in integrierter Bauweise. Die integrierte Komponente 25 hat einen Gegendruckdampf-Eintrittsstutzen 26, ein oder mehrere Abdampf-Austrittsstutzen 27, und der Dampf wird auf der Mantelseite 28, das Heizwasser auf der Rohrseite 29 des Röhrenwärmetauschers 29 geführt.

Die Rohre stehen vorzugsweise senkrecht und fungieren als Prallabscheider für die Dampfnässe, der überschüssige Abdampf, der zur Abdampfturbine 12 geführt wird, ist also weitgehend frei von einer Dampfnässe, das abgeschiedene Wasser und das niedergeschlagene Kondensat (Heizkondensat) verlässt über einen Kondensatabscheider 31 die integrierte Komponente 25. Die Wasserabscheidung ist deswegen essenziell, da der Gegendruckdampf meist schon im Auslegungspunkt, aber mit hoher Wahrscheinlichkeit bei Abweichungen vom Betriebspunkt (Heizteillast, niedrigerer Gegendruck, niedrigere Dampfüberhitzung) mit Dampfnässe beladen ist, welche bei einer weiteren Expansion in der Abdampfturbine 12 zu Schaden und Wirkungsgradeinbußen führen würde. Der stets vorhandene Kondensatfilm auf der Rohrinnenseite führt zu einen respektablen Speichervermögen der integrierten Komponente 25, indem bei einer geringen Druckabsenkung ein Teil des Kondensatfilmes spontan verdampft und der Druckabsenkung entgegen wirkt (bei einem Druckanstieg verdickt sich der Kondensatfilm, wodurch vorübergehend mehr Dampf niedergeschlagen wird); dieses Puffern geschieht selbständig und ganz ohne Regeleingriff oder Hysterese.

Die Fig. 3 zeigt das Detail A in Fig. 2. Die Komponente 25 hat zusätzlich zu der in der Figur 2 ersichtlichen Ausstattung Umlenkbleche 32, sogenannte Baffles, die vorzugsweise horizontal angeordnet sind und für das sich ansammelnde Kondensat einen Überlauf 33 aufweisen; damit bildet sich eine dünne Kondensatschicht 34 auf jedem Umlenkblech 32, wodurch die Oberfläche des Kondensatfilmes und das oben erwähnte Speichervermögen weiter gesteigert wird.

## Patentansprüche

1. Verfahren zur Erzeugung von Kraft und Wärme aus Abwärmen oder Brennstoffen, insbesondere aus festen Biomassen, unter Verwendung eines Dampferzeugers (3) und einer Expansionsmaschine (5), **dadurch gekennzeichnet, daß** entstehender Abdampf über einen Wasserabscheider (10) und vorzugsweise einen Dampfspeicher (11) zu einer Abdampfexpansionsmaschine (12), vorzugsweise einer Abdampfturbine, geführt wird.

2. Einrichtung zur Durchführung des Verfahrens nach Anspruch 1, **dadurch gekennzeichnet, daß** der Wasserabscheider (10) und gegebenenfalls der Dampfspeicher (11) mit einem Heizkondensator (7) in einer Komponente (25) integriert sind.

3. Einrichtung nach Anspruch 2, **dadurch gekennzeichnet, daß** in der Komponente (25) der Gegendruckdampf mantelseitig und das Heizwasser rohrseitig geführt ist.

4. Einrichtung nach Anspruch 2 oder 3, **dadurch gekennzeichnet, daß** in der Komponente (25) die Rohre senkrecht angeordnet sind.

5. Einrichtung nach einem der Ansprüche 2 bis 4, **dadurch gekennzeichnet, daß** die Komponente (25) getrennte Stutzen für den Gegendruckdampf- Eintritt (26) und den Abdampf-Austritt (27) aufweist.

6. Einrichtung nach einem der Ansprüche 2 bis 5, **dadurch gekennzeichnet, daß** die Komponente (25) ohne Entlüftung ausgebildet ist.

7. Einrichtung nach einem der Ansprüche 2 bis 6, **dadurch gekennzeichnet, daß** die Abdampfexpansionsmaschine (12) als einrädrige Gleichdruckturbine ausgebildet ist.

8. Einrichtung nach einem der Ansprüche 2 bis 7, **dadurch gekennzeichnet, daß** die Abdampfexpansionsmaschine (12) eine Düsengruppenregelung (15) aufweist.

9. Einrichtung nach einem der Ansprüche 2 bis 8, **dadurch gekennzeichnet, daß** zur Vorwärmung des Turbinenkondensats ein Speisewasser/Heizwasser-Wärmetauscher (22) vorgesehen ist, der seine Beheizung aus dem Vorlauf (20) vor dessen Beimischung erhält.

10. Einrichtung nach einem der Ansprüche 2 bis 9, **dadurch gekennzeichnet, daß** im Lastfall hoher oder mittlerer Heizlast der Vorlauf (20) zunächst über einen Turbinenkondensator (13) und dann erst über den Heizkondensator (7) geführt ist.
